# EUROPEAN PATENT APPLICATION

(11) **EP 4 450 947 A1**
(43) Date of publication of application: **23.10.2024**
(21) Application number: 23168270.9
(22) Date of filing: 17.04.2023
(51) Int. Cl.: G01M 13/045

(54) **METHOD AND APPARATUS FOR DIAGNOSING A WHEEL BEARING**

(71) Applicant: Balluff GmbH, 73765 Neuhausen a.d.F. (DE)
(72) Inventor: Ruta, Mikolaj, 52-200 Komorowice (PL)
(74) Representative: Jakelski & Althoff Patentanwälte PartG mbB

(57) **Abstract**

A method for diagnosing a wheel bearing of a wheel (11) of a vehicle (11), comprises accelerating the wheel (11) to a defined velocity, measuring a time-profile of a vibration of the wheel bearing from reaching the defined velocity to a stop of the wheel (11), and detecting wear of the wheel bearing from the time-profile of the vibration. An apparatus for diagnosing a wheel bearing of a wheel (11) of a vehicle (10) is adapted to execute the steps of the method.

## Description

The present invention refers to a method for diagnosing a wheel bearing of a wheel of a vehicle. Moreover, the present invention refers to an apparatus that is adapted to execute the steps of a method.

### State of the art

The detection of wheel bearings of vehicles can be performed by checking bearing clearances by hand. This may be followed by accelerating the wheel and listening to whether the bearing produces noise. Therefore, the assessment of bearing wear is a subjective assessment of the inspector. The manufacturer's procedures do not provide for the quantification of the measurements. Measurement results are not repeatable.

Symptoms of bearing degradation are vibrations. When the degradation becomes more obvious by generation of noise and heat there are only a few days or in some cases only a few minutes remaining until the breakdown of the bearing.

The US 8 125 323 B2 describes a wheel monitoring apparatus. The apparatus comprises a measuring and evaluation unit configured to mount to two bolts of the wheel so as to be spaced from its central axis. The unit includes at least one sensor configured to detect a characteristic variable for a state of the wheel bearing and at least one sensor configured to detect a pressure of the tire. This wheel monitoring device may monitor vibrations of the wheel bearing during travel. However, it may not be used for quick diagnoses in a repair shop. Moreover, it is necessary to permanently mount one monitoring device at each wheel of the vehicle.

It is an object of the present invention to provide a method for diagnosing a wheel bearing which may be easily performed in a repair shop. Furthermore, it is an object of the present invention to provide an apparatus for diagnosing a wheel bearing that need only to be attached to a wheel during diagnoses in a repair shop and may be detached after diagnoses has been completed.

### Disclosure of the invention

The method for diagnosing a wheel bearing of a wheel of a vehicle, especially a truck, comprises accelerating the wheel to a defined velocity. A time-profile of a vibration of the wheel bearing is measured from the moment when the defined velocity is reached to the moment when the wheel stops. A wear of the wheel bearing is detected from the time-profile of the vibration.

Different parameters of the time-profile may be evaluated to detect wear of the wheel bearing:
Preferably an intensity of the vibration at the moment when the defined velocity is reached is considered when detecting the wear of the wheel bearing. The intensity of the vibration reaches its maximum when the defined velocity is reached. This maximum vibration is significantly higher for a worn wheel bearing than for a new wheel bearing.

Moreover, it is preferred that a time interval from the moment when the defined velocity is reached to the moment when the wheel stops is considered when detecting the wear of the wheel bearing. A new wheel bearing produces more friction than a worn wheel bearing. Therefore, the time interval becomes larger when the wheel bearing becomes worn.

Furthermore, it is preferred that a form of the time-profile is considered when detecting the wear of the wheel bearing. If the wheel bearing is new vibrations significantly drop when the wheel begins to decelerate. Shortly before the stop of the wheel there are only very little vibrations. On the other hand, a worn wheel bearing results in vibrations that drop nearly linear over time until the wheel stops.

These parameters may be used alone or in any combination to detect wear of the wheel bearing. Most preferable a correlation of the intensity of the vibration at the moment when the defined velocity is reached, the time interval from the moment the defined velocity is reached to the moment the wheel stops and the form of the time-profile is considered when the detecting of the wheel bearing. This allows for a more detailed analysis of the time-profile. For example, if a wheel bearing is extremely worn it may show very high vibrations at the moment the defined velocity is reached but the vibrations will quickly decrease since the wheel bearing becomes hot and the wheel stops with in short time. Such a time-profile is best analyzed by a correlation of all above mentioned parameters.

To distinguish a worn wheel bearing from a wheel bearing that is in working order, the time-profile is preferably compared to empiric reference data for wheel bearings of different wheel conditions, when detecting the wheel bearing. The reference data shall refer to the same time of vehicle. However, wear can also be detected if only data for a new wheel bearing is available. If the intensity of the vibration when the defined velocity is reached is at least 50 % higher than the intensity of the vibration of a new wheel bearing the wheel bearing may be considered as being worn. If the time until the wheel that has been accelerated to the defined velocity stops is especially more than 200 % of the time of a new wheel bearing the wheel bearing may be considered as been worn. When the form of the time-profile is mostly linear for at least 75 % of the time-profile the wheel bearing maybe considered as being worn.

Preferably a recommendation whether the wheel bearing shall be replaced is generated depending on the detected wear. For generating the recommendation time-profiles may especially be classified in three classes. Time-profiles of the first class show that a wheel bearing is in good condition. Time-profiles in the second class show that the wheel bearing shall be replaced. Time-profiles in the third class will produce a critical alert to replace the wheel bearing. The recommendation may especially be communicated to a user via a human machine interface (HMI).

Vibration sensors may detect vibrations as accelerations in three directions in space. The vibration acceleration perpendicular to the ground is especially relevant for detecting wear of the wheel bearing. It is preferable to express the intensity of the vibration by plotting it in the time-profile as a root mean square vibration acceleration. This is a square root of the area under the acceleration spectral density curve per particular to the ground.

Accelerating the wheel to the defined velocity preferably begins with lifting the wheel from the ground. This can be done by raising the front axle of the vehicle off the ground or by lifting the whole vehicle off the ground. Then the wheel is accelerated by an accelerator, especially an electrical accelerator. The accelerator is removed from the wheel when reaching the defined velocity. After that the wheel begins to decelerate until the wheel stops.

The velocity of the wheel may be preferably detected by using velocity information from the vehicle. Especially this information is received from a velocity sensor that is permanently installed in the vehicle system.

Preferably the time-profile of the vibration is measured using a sensor that is removably mounted on the steering knuckle of the wheel. The same sensor can be used again and again to successively detect wear of the wheel bearings of booth front wheels of several vehicles.

In a further aspect of the invention an apparatus for diagnosing a wheel bearing of a wheel of a vehicle is adapted to execute the steps of the method. To accelerate the wheel the apparatus may comprise an accelerator. To measure the time-profile the apparatus may comprise a vibration sensor that is adapted to be removably mounted on a steering knuckle of a wheel. To detect wear of the wheel bearing from the time-profile the apparatus may comprise a computer device adaptor to analyze a velocity-time-profile.

### Brief description of the drawings

Embodiments of the invention will be described in more detail below with reference to the figures.
Figure 1 shows a schematic drawing of a vehicle while one of its wheel bearings is diagnosed using a method according to an embodiment of the invention.
Figure 2 schematically shows the inner side of wheel of the vehicle according to figure 1.
Figure 3 shows a flowchart of a method according to an embodiment of the invention.
Figure 4 shows a time-profile that is analyzed in a method according to an embodiment of the invention.
Figure 5 shows another time-profile that is analyzed using a method according to an embodiment of the invention.
Figure 6 shows yet another time-profile that is analyzed using a method according to an embodiment of the invention.
Figure 7 shows yet another time-profile that is analyzed using a method according to an embodiment of the invention.

### Embodiments of the invention

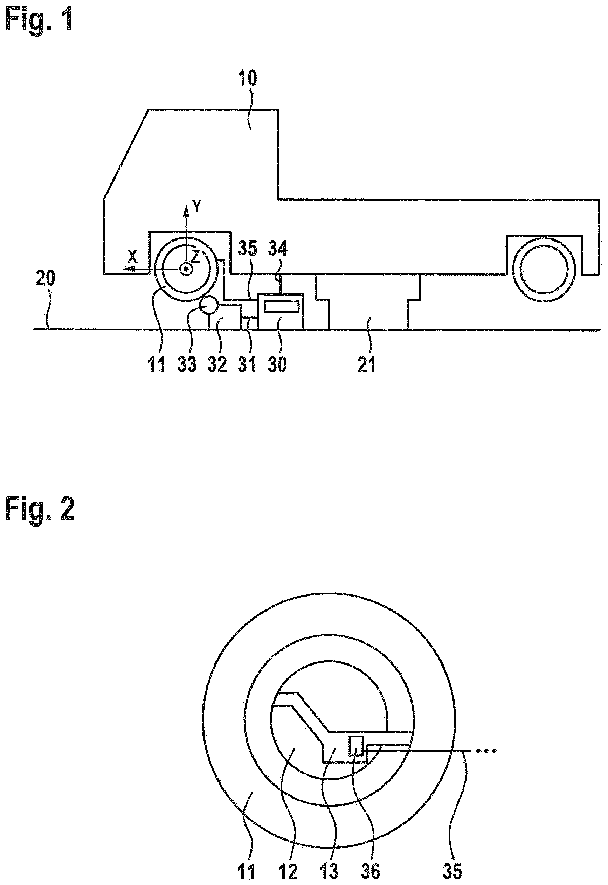

Figure 1 shows a vehicle 10 that is a truck. The wheel bearing of its left front wheel 11 shell be diagnosed using a method according to an embodiment of the invention.

For this diagnoses the vehicle 10 is lifted off the ground 20 using a car lift 21. The method is implemented as a computer program in a computer device 30. The computer device 30 is linked by a first data link 31 to an electric accelerator 32. The accelerator 32 has an accelerator wheel 33 that contacts the front wheel 11 of the vehicle 10. A second data link 34 links the computer device 30 to a speed information system (not shown) of the vehicle 10.

Figure 2 shows that the computer device 30 is further linked by a third data link 35 to a vibration sensor 36. The vibration sensor 36 is removably mounted on a steering knuckle 13 of the wheel 11 behind the wheel bearing 12. It detects vibrations in the direction of ride x, perpendicular to the ground y, and parallel to the wheel-axis z.

For example, the vibration sensor 36 maybe a BCM0001 sensor or a BCM0002 sensor (BALLUFF GmbH, Germany). The computer device 30 maybe a CMTK condition monitoring tool kit or an PMSYS portable monitoring system (BALLUFF GmbH, Germany).

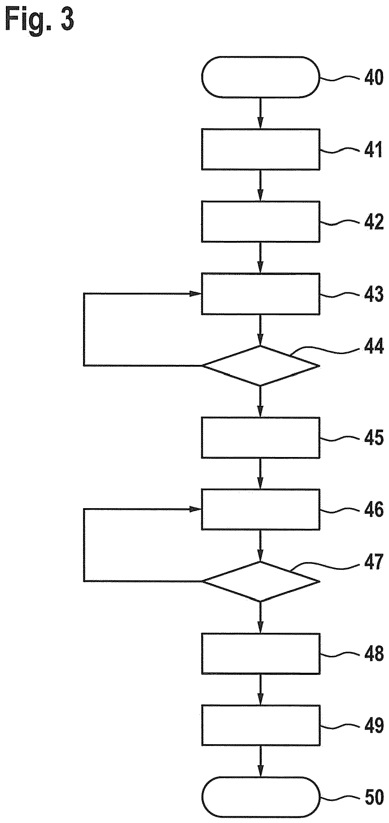

In the embodiment of the method shown in Figure 3, after the beginning 40 of the method the vehicle 10 is lifted 41 by the car lift 21. Then the accelerator 31 is moved 42 so that its accelerator wheel 33 contacts the front wheel 11. After that the front wheel 11 is accelerated 43 by the accelerator 32 until a defined velocity of 90 km/h is reached 44. Then the accelerator 32 is removed 45 from the wheel 11. When the wheel 11 begins to decelerate measuring 46 of a time-profile of a vibration of the wheel bearing 12 is started using the sensor 36. The measurement is continued until the wheel 11 stops 47. After that wear of the wheel bearing 12 is detected 48 from the vibration-time-profile. Depending on the detected wear a recommendation whether the wheel bearing 12 shall be replaced is generated 49 and communicated via a display of the computer device 30. After that the method is ended 50.

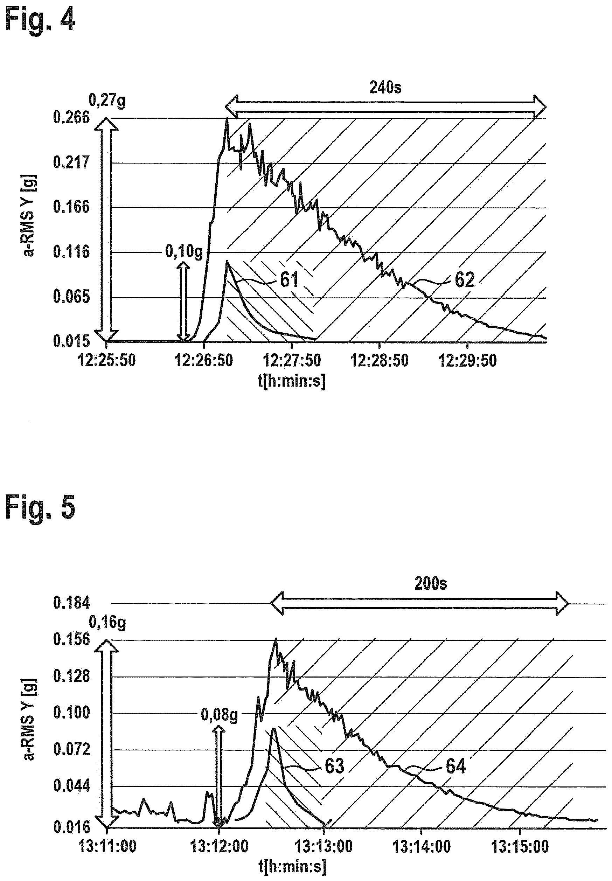

An intensity as a vibration is plotted in the time-profile as a root mean square vibration acceleration a-RMS Y per perpendicular to the ground 20 over time t. To detect the wear of the wheel bearing 12 the intensity of the vibration when the defined velocity is reached, the time interval from reaching the defined velocity to the stop of wheel 11 and the form of the time-profile a correlated. Moreover, they are compared to reference data for a new wheel bearing 12 for the same vehicle type. Figure 4 shows a reference time-profile 61 and a measured time-profile 62 for a vehicle 10. The reference time-profile 61 was measured at a mileage of 55 km and the measured time-profile 62 was measured at a mileage of 396,647 km.

While the vibration of the reference time-profile 61 reaches a maximum of 0,10 g the measured time-profile 62 reaches a maximum of 0,27 g. While the wheel 11 needs seventy seconds to stop after the accelerator 72 has been removed the wheel 11 of the measured time-profile 62 needs two hundred forty seconds to stop. The form of the reference time-profile 61 shows a quick decrease of vibrations shortly after the wheel 11 has begun to decelerate while the vibrations remain nearly unchanged for the rest of the time until the wheel 11 stops. In contrast the vibrations of the measured time-profile 62 decreases in a nearly linear manner. The maximum intensity of vibration, the time until the wheel 11 stops and the form of the time-profile 61, 62 all show that the diagnosed wheel bearing 12 is worn in comparison to the reference wheel bearing 12.

The diagnosis of the wheel bearing 12 of the left front wheel 11 of the vehicle 10 has been repeated for the wheel bearing 12 of the right front wheel 11. The result of this diagnosis is show in Figure 5. A reference time-profile 63 for the right wheel bearing 12 is compared to the measured time-profile 64. The intensity of the vibration of the reference time-profile 63 is 0,08 g in contrast to 0,16 g for the measured time-profile 64. While the time until the wheel 11 stops is seventy seconds in the reference time-profile 63 it is two hundred seconds in the measured time-profile 64. The form of the reference time-profile 63 is mainly similar to that of the reference time-profile 61 of the left front wheel bearing 12 and the form of the measured time-profile 64 is mainly the same as for the left front wheel bearing 12. Therefore, the right wheel bearing 12 is also worn.

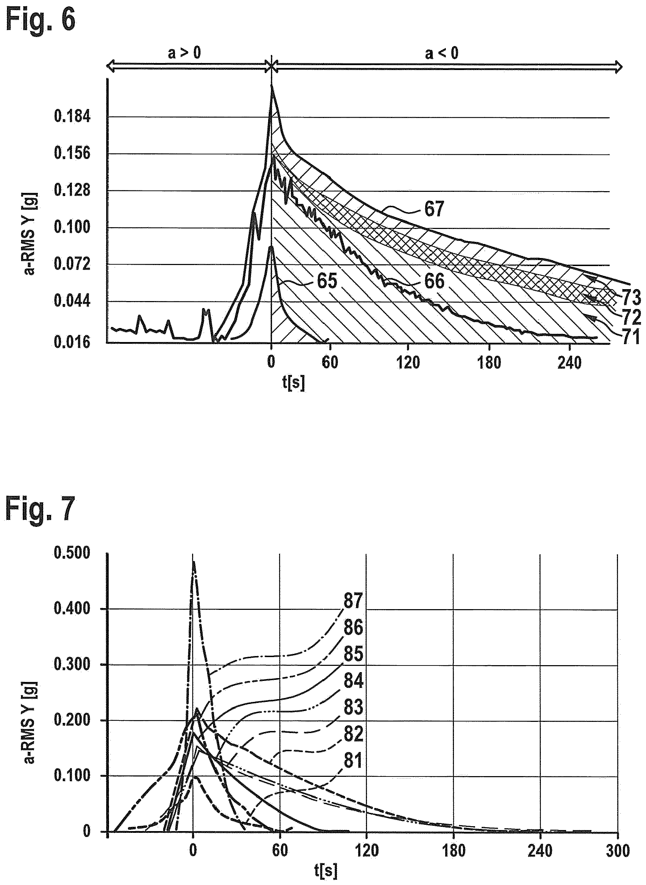

Figure 6 shows how time-profiles may be classified in different classes in an embodiment of the inventive method. The first class 71 comprises wheel bearings 12 that are in good condition. The second class 72 comprises wheel bearings 12 that should be replaced. The third class 73 comprises wheel bearings 12 that are no longer safe and shall urgently be replaced. Time t is counted from the moment when the acceleration a of the wheel 11 drops below zero because the wheel 11 starts to decelerate. Three measured time-profiles 65 to 67 are shown. The first time-profile 65 is a time-profile of a new wheel bearing 12. It is well within the first class 71. The second time-profile 66 is a time-profile of a wheel bearing 12 with a mileage of 40,000 km. It is still within the first class 71. The third time-profile 67 is a time-profile of a wheel bearing 12 with a mileage of 800,000 km. This time-profile 67 is within the third class 73. When such a high wear of a wheel bearing 12 is detected the computer device 30 will output a critical alert.

Figure 7 shows time-profiles 81 to 87 of several diagnosed wheel bearings 12. The first time-profile 81 was measured from a new wheel bearing 12. The second time-profile 82 was measured from a left wheel bearing with a mileage of 369,000 km. The third time-profile 83 was measured from a right wheel bearing 12 with a mileage of 369,000 km. The fourth time-profile 84 was measured from a left wheel bearing with a mileage of 861,000 km. The fifth time-profile 85 was measured from a right wheel bearing with a mileage of 861,000 km. The sixth time-profile was measured from a right wheel bearing with a mileage of 694000 km. The seventh time-profile was measured from a left wheel bearing 12 with a mileage of 694,000 km.

All wheel bearings 12 according to the first five time-profiles 81 to 85 are still in good condition. The wheel bearings 12 according to the sixth time-profile 86 and the seventh time-profile 87 shall be replaced. While the wear of the wheel bearing 12 according to the sixth time-profile 86 cannot be concluded from the time until the wheel 11 stopped or from the maximum intensity alone it can be seen from a correlation of this information. A wheel bearing with such high maximum vibration should need much more time until the wheel 11 stops. The seventh wheel bearing 12 can be diagnosed as being worn because the maximum vibration in its time-profile 87 is very high and its wheel 11 stops even earlier then the wheel 11 with a new wheel bearing 12 according to the first time-profile 81.

## Claims

1. Method for diagnosing a wheel bearing (12) of a wheel (11) of a vehicle (10), comprising the following steps:
- accelerating (43) the wheel (11) to a defined velocity,
- measuring (46) a time-profile of a vibration of the wheel bearing (12) from reaching the defined velocity to a stop of the wheel (11), and
- detecting (48) wear of the wheel bearing (12) from the time-profile (61-67, 81-87) of the vibration.

2. Method according to 1, **characterized in that** an intensity of the vibration when the defined velocity is reached is considered when detecting (48) the wear of the wheel bearing (12).

3. Method according to 1 or 2, **characterized in that** a time interval from reaching the defined velocity to the stop of the wheel (11) is considered when detecting (48) the wear of the wheel bearing (12).

4. Method according to any of claims 1 to 3, **characterized in that** a form of the time-profile (61-67, 81-87) is considered when detecting (48) the wear of the wheel bearing (12).

5. Method according to any of claims 1 to 4, **characterized in that** a correlation of an intensity of the vibration when the defined velocity is reached, a time interval from reaching the defined velocity to the stop of the wheel (11), and a form of the time-profile (61-67, 81-87) is considered when detecting (48) the wear of the wheel bearing (12).

6. Method according to any of claims 1 to 5, **characterized in that** the time-profile (61-67, 81-87) is compared to empiric reference data for wheel bearings (12) of different wear conditions when detecting (48) the wear of the wheel bearing (12).

7. Method according to any of claims 1 to 6, **characterized in that** a recommendation whether the wheel bearing (12) shall be replaced is generated (49) depending on the detected wear.

8. Method according to any of claims 1 to 7, **characterized in that** an intensity of the vibration is plotted in the time-profile (61-67, 81-87) as the root mean square vibration acceleration (a-RMS Y) perpendicular to the ground (20).

9. Method according to any of claims 1 to 8, **characterized in that** the wheel (11) is lifted (41) from the ground (20), the wheel (11) is accelerated (43) by an accelerator (32) and the accelerator (32) is removed (45) from the wheel (11) when reaching the defined velocity.

10. Method according to any of claims 1 to 9, **characterized in that** the velocity of the wheel (11) is detected using velocity information from the vehicle (10).

11. Method according to any of claims 1 to 10, **characterized in that** the time-profile (61-67, 81-87) of the vibration is measured (46) using a sensor (36) that is removably mounted on a steering knuckle (13) of the wheel (11).

12. Apparatus for diagnosing a wheel bearing (12) of a wheel (11) of a vehicle (10) that is adapted to execute the steps of a method according to any of claims 1 to 11.

13. Apparatus according to claim 12, comprising a vibration sensor (36) that is adapted to be removably mounted on a steering knuckle (13) of a wheel (11).

14. Apparatus according to claim 12 or 13, comprising a computer device (30) adapted to analyze a vibration-time-profile (61-67, 81-87).
